# EUROPEAN PATENT APPLICATION

(11) **EP 1 736 819 A1**
(43) Date of publication of application: **27.12.2006**
(21) Application number: 05255417.7
(22) Date of filing: 05.09.2005
(51) Int. Cl.: G02F 1/225, G02F 1/035

(54) **Method of electroplating**

(30) Priority: 20.06.2005 JP 2005179323
(71) Applicant: FUJITSU LIMITED, Kawasaki-shi, Kanagawa 211-8588 (JP)
(72) Inventor: Maeda, Akio, c/o Fujitsu Limited, Kawasaki-shi Kanagawa 211-8588 (JP); Iwamoto, Masaki, c/o Fujitsu Limited, Kawasaki-shi Kanagawa 211-8588 (JP)
(74) Representative: Fenlon, Christine Lesley

(57) **Abstract**

An electroplating base includes a separate electrically conductive section isolated from an electrically conductive section. An electrically conductive connecting pattern connects the separate electrically conductive section to the electrically conductive section. Electroplating allows establishment of electroplating films on the electrically conductive section and the separate electrically conductive section. A non-conductive path extends in the electroplating base from a point of a non-conductive section to a point of the non-conductive section. The ends of the non-conductive path are connected to the non-conductive section, so that generation of electroplating films is reliably avoided at the ends of the non-conductive path. The obtained non-conductive section and non-conductive path serve to reliably insulate the electroplating film on the electrically conductive section and the electroplating film on the separate electrically conductive section from each other.

## Description

The present invention relates to a method of electroplating for forming an electroplating film on a wafer.

An optical chip made of a dielectric crystal such as LiNbO₃, for example, has conventionally been known. The optical chip is incorporated in an optical modulator of a so-called Mach-Zehnder type modulator, for example. The optical chip includes electrodes such as a signal electrode and first and second ground electrodes formed on a light waveguide. The signal electrode is located in a space between the first and second ground electrodes. A groove is formed between the signal electrode and the first ground electrode as well as between the signal electrode and the second ground electrode. The grooves serve to insulate the signal electrode from the first and second ground electrodes.

A wafer is first prepared in the production of the optical chip. Electrically conductive electroplating bases are formed on the wafer for the individual optical chip. A pair of non-conductive or insulating paths are formed between the adjacent electroplating bases. Subsequent electroplating process serves to establish electroplating films over electrically conductive sections at areas adjacent to the non-conductive paths. The individual optical chip is then cut out from the wafer. The electroplating films are removed on the wafer prior to the cut-out of the optical chips for separating areas corresponding to the adjacent optical chips. In this case, resist films are formed to cover the electrodes and the non-conductive paths.

Improvement in the transmission rate of data must cause an increase in the thickness of the electrodes in the optical chip. An increased thickness of the electrodes leads to an enlarged difference of the thickness between the resist films over the non-conductive paths and the resist films over the electrodes. The resist films covering over the non-conductive paths cannot sufficiently be subjected to exposure. In particular, the resist film tends to remain at the periphery of an exposure mask. The electroplating base cannot sufficiently be removed from the ends of the non-conductive paths. This often results in a short circuit between the electrodes.

The present invention seeks to provide a method of electroplating capable of reliably establishing insulation between electroplating films formed on an electrically conductive section.

According to a preferred embodiment of the present invention, there is provided a method of electroplating, comprising forming an electrically conductive electroplating base over a wafer, wherein a non-conductive section, at least a non-conductive path and an electrically conductive connecting pattern are formed on the surface of the wafer: said non-conductive section extending along a predetermined cutting line in a space between first and second regions; said non-conductive path extending in the second region from a point of the non-conductive section to a point of the non-conductive section, said non-conductive path defining a separate electrically conductive section isolated in the second region; and said electrically conductive connecting pattern crossing the non-conductive section, said electrically conductive connecting pattern connecting the separate electrically conductive section to an electrically conductive section within the first region.

The method allows establishment of the electrically conductive section within the first region and the separate electrically conductive section within the second region in the electroplating base. The electrically conductive connecting pattern extends across the non-conductive section so as to connect the separate electrically conductive section to the electrically conductive section within the first region. When the electroplating is implemented based on the electroplating base, an electroplating film is formed on the electrically conductive section and the separate electrically conductive section.

The non-conductive path extends in the electroplating base from a point of the non-conductive section to a point of the non-conductive section. The ends of the non-conductive path are connected to the non-conductive section, so that generation of electroplating films is reliably avoided at the ends of the non-conductive path. The obtained non-conductive section and non-conductive path serve to reliably insulate the electroplating film on the electrically conductive section and the electroplating film on the separate electrically conductive section from each other.

The method may further comprise supplying electric current to the separate electrically conductive section from the electrically conductive connecting pattern so as to form an electroplating film over the separate electrically conductive section. An electroplating film can reliably be established over the separate electrically conductive section even though the separate electrically conductive section is isolated from the electrically conductive section. A resist film may be formed over the electrically conductive connecting pattern and the non-conductive section prior to establishment of the electroplating film. The resist film serves to avoid establishment of an electroplating film over the electrically conductive connecting pattern. The electroplating film on the electrically conductive section is isolated from the electroplating film on the separate electrically conductive section in a space extending along the predetermined cutting line between the first and second regions. The wafer may be cut along the predetermined cutting line after the electroplating film has been formed.

For a better understanding of the present invention, and to show how the same may be carried into effect, reference will now be made, by way of example, to the accompanying drawings, in which:-
Fig. 1 is a plan view schematically illustrating the structure of an optical modulator;
Fig. 2 is a plan view schematically illustrating the structure of an optical chip;
Fig. 3 is a sectional view taken along the line 3-3 in Fig. 2;
Fig. 4 is a plan view schematically illustrating a wafer utilized in the production of the optical chip;
Fig. 5 is an enlarged partial sectional view of the wafer, taken along the line 5-5 in the Fig. 4, for schematically illustrating the process of forming a Ti layer and a photoresist over the wafer;
Fig. 6 is a plan view schematically illustrating the pattern of photoresisit films over the wafer;
Fig. 7 is an enlarged partial sectional view of the wafer schematically illustrating the Ti layers patterned based on the photoresist film on the wafer;
Fig. 8 is an enlarged partial sectional view of the wafer schematically illustrating the process of diffusing Ti atoms into the wafer;
Fig. 9 is an enlarged partial sectional view of the wafer schematically illustrating the process of forming SiO_{□}, Si, Ti and Au layers on the surface of the wafer;
Fig. 10 is an enlarged partial plan view of the wafer schematically illustrating the pattern of a photoresist film on the surface of the Au layer;
Fig. 11 is an enlarged partial sectional view of the wafer schematically illustrating the process of applying wet etching to the Au and Ti layers based on the photoresist film;
Fig. 12 is an enlarged partial plan view of the wafer schematically illustrating the pattern of electroplating films on the Ti and Au layers;
Fig. 13 is an enlarged partial sectional view of the wafer schematically illustrating the process of forming photoresist films at locations adjacent to an electrically conductive sections and first and second separate electrically conductive sections;
Fig. 14 is an enlarged partial plan view of the wafer schematically illustrating the pattern of the photoresist films over the wafer;
Fig. 15 is an enlarged partial sectional view of the wafer schematically illustrating the process of electroplating at locations adjacent the photoresist films;
Fig. 16 is an enlarged partial sectional view of the wafer schematically illustrating the process of electroplating at locations adjacent to the photoresist films; and
Fig. 17 is a plan view of the wafer illustrating the process of cutting the wafer for separation of the individual optical chips along cutting lines.

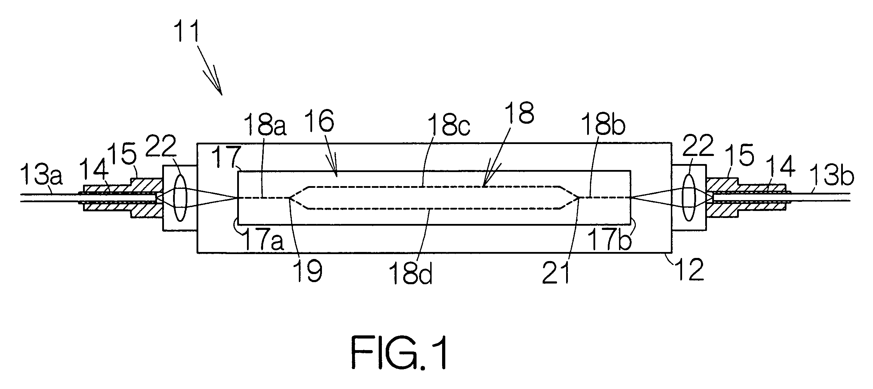

Fig. 1 schematically illustrates the structure of an optical modulator 11 serving as a light transmitting/receiving apparatus. The optical modulator 11 is a so-called Mach-Zehnder type modulator, for example. The optical modulator 11 includes a casing 12. Input fiber optics 13a and output fiber optics 13b are coupled to the casing 12. The fiber optics 13a, 13b are aligned on a common straight line. As conventionally known, the individual fiber optics 13a, 13b include a core, a clad layer designed to surround the core, and a cover layer designed to cover the clad layer.

A ferrule 14, for example, is attached to the individual tip ends of the fiber optics 13a, 13b so as to assist the connection of the input and output fiber optics 13a, 13b with the casing 12. The ferrule 14 is made of a glass material, for example. The ferrules 14 are coupled with corresponding connectors 15. The connectors 15 are removably fixed to the casing 12. The fiber optics 13a, 13b are in this manner coupled to the casing 12.

The casing 12 contains an optical chip 16 for optical transmission. The optical chip 16 is located between the fiber optics 13a, 13b. The optical chip 16 includes a body 17 and a light waveguide 18 formed along the upper flat surface of the body 17. The body 17 is shaped in a flat elongated plate, for example. The body 17 defines a pair of end surfaces 17a, 17b extending within planes perpendicular to the upper flat surface of the body 17. The light waveguide 18 is designed to extend in the longitudinal direction of the body 17 between the end surfaces 17a, 17b. The light waveguide 18 is allowed to transmit light through the body 17.

The tip ends of the light waveguide 18 are connected to the fiber optics 13a, 13b. The centroid of the light waveguide 18 is aligned on the longitudinal axes of the fiber optics 13a, 13b. The light waveguide 18 includes an input path 18a and an output path 18b both defined on a common straight line. The input and output paths 18a, 18b are connected to each other through first and second bifurcations 18c, 18d. The bifurcations 18c, 18d are bifurcated at divarications 19, 21 from the input and output paths 18a, 18b. The first and second bifurcations 18c, 18d may extend in parallel with each other.

A lens 22 is incorporated between the fiber optics 13a and the end surface 17a of the optical chip 16 and between the end surface 17b of the optical chip 16 and the fiber optics 13b. The lens 22 serves to condense light from the tip end of the fiber optics 13a on the tip end of the light waveguide 18. Likewise, the lens 22 serves to condense light from the tip end of the light waveguide 18 to the tip end of the fiber optics 13b.

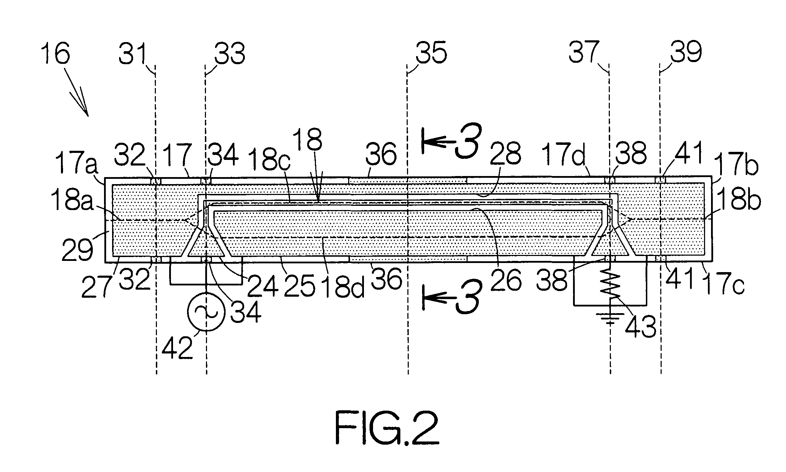

As shown in Fig. 2, a signal electrode 24 is formed on the flat surface of the body 17. The signal electrode 24 is designed to extend on the first bifurcation 18c. The signal electrode 24 is designed to extend from a point to a point on a side periphery 17c extending between the end surfaces 17a, 17b. A first ground electrode 25 extends in a space between the signal electrode 24 and the side periphery 17c inside the signal electrode 24. A groove 26 is formed to insulate the signal electrode 24 from the first ground electrode 25. A second ground electrode 27 extends in a space between the signal electrode 24 and the other side periphery 17d outside the signal electrode 24. A groove 28 is likewise formed to insulate the signal electrode 24 from the second ground electrode 27. The second ground electrode 27 extends in parallel with the signal electrode 24 from a point to a point on the side periphery 17c in parallel with the signal electrode 24.

A non-conductive or insulating section 29 is defined on the body 17 along the outline of the upper flat surface of the body 17. The non-conductive section 29 surrounds the signal electrode 24 and the first and second ground electrodes 25, 27. A pair of first electrically conductive pieces 32, 32 is formed in the non-conductive section 29. The first electrically conductive pieces 32 are aligned on a first reference line 31 extending laterally across the upper flat surface of the body 17. The first reference line 31 is set perpendicular to the light waveguide 18. The first electrically conductive pieces 32 extend outward from the second ground electrode 27 to the side peripheries 17c, 17d, respectively. Likewise, a pair of second electrically conductive pieces 34, 34 is formed in the non-conductive section 29. The second electrically conductive pieces 34 are aligned on a second reference line 33 set in parallel with the first reference line 31. One of the second electrically conductive pieces 34 extends outward from the second ground electrode 27 to the side periphery 17d. The other of the second electrically conductive pieces 34 extends outward from the signal electrode 24 to the side periphery 17c.

A pair of third electrically conductive pieces 36, 36 is formed in the non-conductive section 29. The third electrically conductive pieces 36 are aligned on a third reference line 35 set in parallel with the second reference line 33. The third reference line 33 is defined at equal intervals to the respective end surfaces 17a, 17b. The third electrically conductive pieces 36 have dimensions larger than the first and second electrically conductive pieces 32, 34 in the longitudinal direction of the optical chip 16. One of the third electrically conductive pieces 36 extends outward from the second ground electrode 27 to the side periphery 17d. The other of the third electrically conductive pieces 36 extends outward from the first ground electrode 25 to the side periphery 17c.

Likewise, a pair of fourth electrically conductive pieces 38, 38 is formed in the non-conductive section 29. The fourth electrically conductive pieces 38 are aligned on a fourth reference line 35 set in parallel with the third reference line 35. Moreover, a pair of fifth electrically conductive pieces 41, 41 is formed in the non-conductive section 29. The fifth electrically conducive pieces 41 are aligned on a fifth reference line 39 set in parallel with the fourth reference line 37. The fourth electrically conductive pieces 38 are symmetric to the second electrically conductive pieces 34 relative to the third reference line 35. The fifth electrically conductive pieces 41 are likewise symmetric to the first electrically conductive pieces 32 relative to the third reference line 35. The fourth and fifth electrically conductive pieces 38, 41 are formed in the same manner as the second and first electrically conductive pieces 34, 32.

One ends of the electrodes 24, 25, 27 are connected to a signal source 42. The other ends of the electrodes 24, 25, 27 are connected to a terminator 43. The signal source 42 supplies an electric signal to the signal electrode 24.

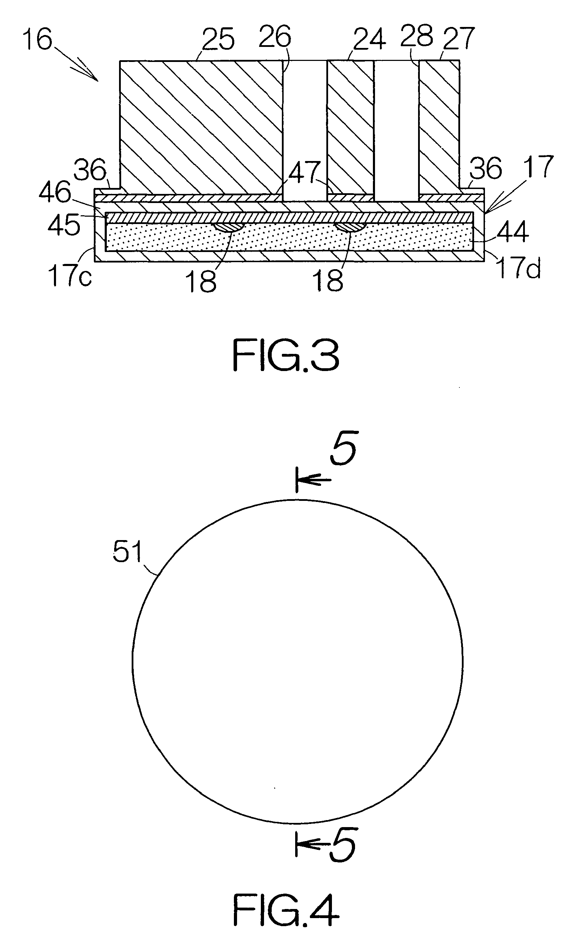

As shown in Fig. 3, the body 17 of the optical chip 16 includes a substrate 44. The substrate 44 is made of a dielectric crystal, such as LiNbO₃, for example. The substrate 44 is designed to extend along a predetermined plane. The aforementioned light waveguide 18 is formed in the substrate 44. The light waveguide 18 is formed in the substrate 44 along the upper flat surface of the substrate 44 based on thermal diffusion of a mineral material, such as Ti, as described later in detail.

The body 17 includes a SiO₂ layer 45 extending over the upper flat surface of the substrate 44. The light waveguide 18 is thus interposed between the SiO₂ layer 45 and the substrate 44. The SiO₂ layer 45 functions as a buffer layer. The body 17 further includes a Si layer 46 extending over the surface of the SiO₂ layer 45. The Si layer 46 is designed to simultaneously cover over the side and back surfaces of the substrate 44. The Si layer 46 receives the signal electrode 24 and the first and second ground electrodes 25, 27 at its upper flat surface. The electrodes 24, 25, 27 may be made of an electrically conductive material, such as Au, for example. A Ti layer 47 is interposed between the electrodes 24, 25, 27 and the Si layer 46.

The aforementioned first, second, third, fourth and fifth electrically conductive pieces 32, 34, 36, 38, 41 are formed on the upper flat surface of the Si layer 46. These electrically conductive pieces 32, 34, 36, 38, 41 may be made of a Ti film 47 and a Au film. The Ti film 47 and the Au film are formed as an electroplating base as described later in detail. The electroplating base is utilized to form the electrodes 24, 25, 27. The electrically conductive pieces 32, 34, 36, 38, 41 are set significantly thinner than the electrodes 24, 25, 27 on the flat surface.

Next, a brief description will be made on the operation of the optical modulator 11. When light from a light source such as a laser diode enters the casing 12 through the input fiber optics 13a, the input light is guided to the tip end of the light waveguide 18 or input path 18a through the lens 22. Subsequently, the input light divaricates at the divarication 19 to the first and second bifurcations 18c, 18d. The input light is substantially divided into halves at the divarication 19 for the first and second bifurcations 18c, 18d.

An electric signal is inputted to the signal electrode 24 from the signal source 42. An electric field acts on the first bifurcation 18c based on the electric signal. The refractive index of the inputted light thus changes in the first bifurcation 18c due to the electric field. So-called electrooptic effect serves to induce a shift of phase of the transmitted light in the first bifurcation 18c. The shift corresponds to binary values "1" and "0" of the electric signal. The lights guided through the first and second bifurcations 18c, 18d are combined at the divarication 21.

The light is divided into the output light and the leaking light at the divarication 21 based on the difference in the phase between the lights in the first and second bifurcations 18c, 18d. The output light is led to the output path 18b. The leaking light permeates into the substrate 44 of the body 17. The output light from the tip end of the output path 18b enters the output fiber optics 13b through the lens 22. The output fiber optics 13b serve to transmit the output light or light signal toward a destination or receiver. Information data can be read out based on the intensity of the output light at the receiver.

Next, a detailed description will be made on a method of making the optical chip 16. As shown in Fig. 4, a wafer 51 is first prepared. The wafer 51 is made of a dielectric crystal, such as LiNbO₃, for example. The wafer 51 corresponds to the substrate 44 of the body 17. The diameter of the wafer 51 is set in a range between 3inches and 4inches approximately, for example.

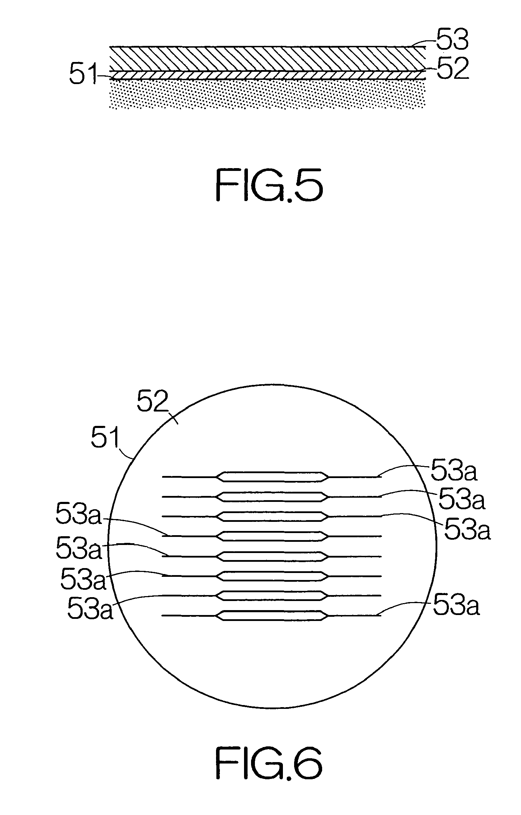

As shown in Fig. 5, a mineral material layer or Ti layer 52 is formed all over the flat surface of the wafer 51. Evaporation is utilized to form the Ti layer 52, for example. The wafer 51 is placed in a chamber of an evaporation apparatus, not shown. The thickness of the Ti layer 52 is set at 100nm approximately, for example. The wafer 51 is taken out from the chamber after the Ti layer 52 has been formed.

A photoresist 53 is applied to the entire surface of the Ti layer 52. The thickness of the photoresist 53 may be set at 1µm approximately, for example. The photoresist 53 is subjected to exposure and development. Photoresist films 53a are formed in a predetermined pattern, as shown in Fig. 6. The surface of the Ti layer 52 is exposed around the photoresist films 53a.

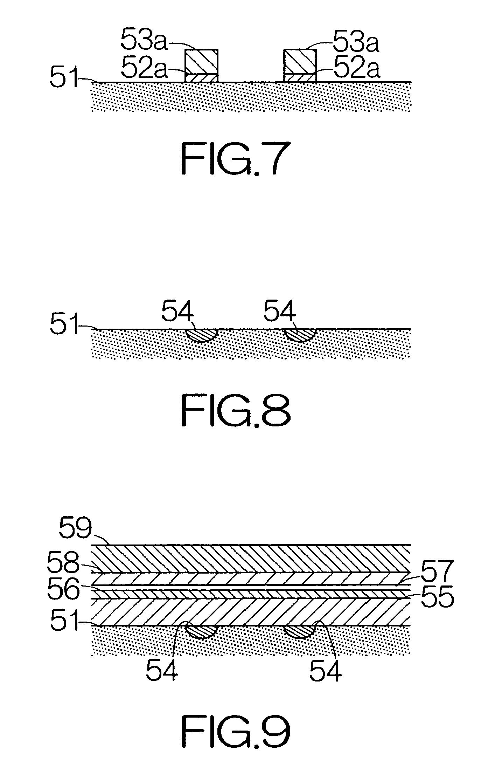

Wet etching process is thereafter effected on the Ti layer 52. A predetermined etchant is employed. The Ti layer 52 is removed around the photoresist films 53a. As shown in Fig. 7, Ti layers 52a of the predetermined pattern thus remain on the surface of the wafer 51. A predetermined stripper is then applied to the wafer 51 so as to remove the photoresist films 53a.

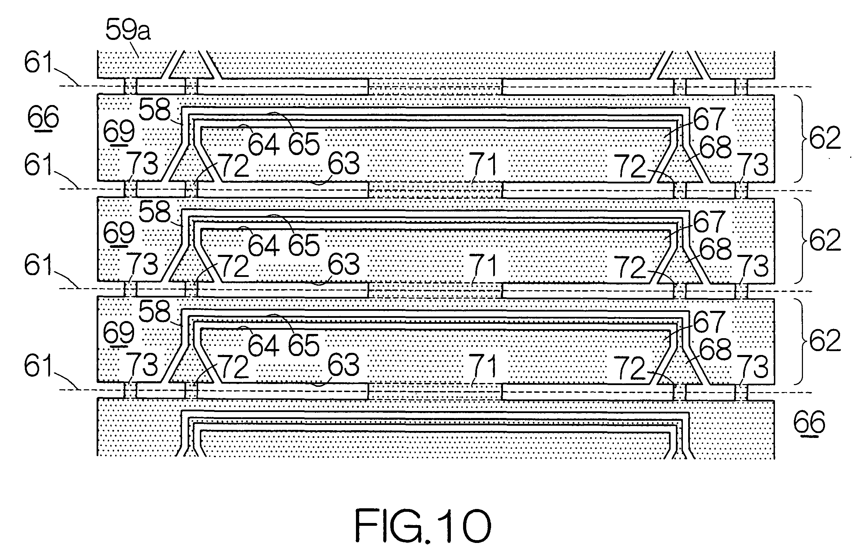

The wafer 51 is then placed in a chamber of a diffusion apparatus, not shown. The wafer 51 is heated in the chamber. Ti atoms thus diffuse into the flat front surface of the wafer 51. As shown in Fig. 8, light waveguides 54 are in this manner formed to extend in the wafer 51 along the flat front surface of the wafer 51 based on the diffusion of the Ti atoms. The wafer 51 is then taken out from the chamber.

As shown in Fig. 9, a SiO₂ layer 55 is then formed on the front surface of the wafer 51. Sputtering is employed to form the SiO₂ layer 55. The wafer 51 is placed in a chamber of a sputtering apparatus, not shown. The thickness of the SiO₂ layer 55 may be set at 1µm approximately, for example. The wafer 51 is taken out from the chamber after the SiO₂ layer 55 has been formed. The wafer 51 is subsequently heated.

A Si layer 56 is subsequently formed on the surface of the SiO₂ layer 55 and the back surface of the wafer 51. Evaporation is utilized to form the Si layer 56. The wafer 51 is placed in a chamber of an evaporation apparatus, not shown. The thickness of the Si layer 56 is set at 100nm approximately, for example. The wafer 51 is taken out from the chamber after the Si layer 56 has been formed.

A Ti layer 57 and a Au layer 58 are subsequently formed on the surface of the Si layer 56 in this sequence. Evaporation is employed to form the Ti and Au layers 57, 58. The wafer 51 is placed in a chamber of an evaporation apparatus, not shown. The thickness of the Ti layer 57 is set at 50nm approximately, for example. The thickness of the Au layer 58 is set at 200nm approximately, for example. The wafer 51 is taken out from the chamber after the Ti and Au layers 57, 58 have been formed.

A photoresist 59 is subsequently applied to the entire surface of the Au layer 58. The thickness of the photoresist 59 is set at 1µm approximately, for example. The photoresist 59 is subjected to exposure and development. A photoresist film 59a is thus established in a predetermined pattern, as shown in Fig. 10.

Here, cutting lines 61 are set on the wafer 51. The cutting lines 61 are designed to extend in parallel with each other. Each light waveguide 54 is cut off based on the cutting lines 61. The cutting lines 61 define the side peripheries 17c, 17d of each optical chip 16. Regions 62 are defined on the photoresist film 59a in accordance with the cutting lines 61.

An elongated void 63 extends along the cutting line 61 in a space between the adjacent regions 62. Void paths 64, 65 are formed in the individual region 62. The void path 64, 65 is designed to extend from a point to a point in the elongated void 63. Voids 66 are also formed at opposite ends of the elongated voids 63. The voids 66 extend across the cutting lines 61. The elongated voids 63 serve to connect the voids 66 to each other. Here, the voids 66 may extend to the periphery of the wafer 51.

A first separate section 67 is defined in the individual region 62 at a location adjacent to the elongated void 63. The first separate section 67 is isolated inside the void path 64. The first separate section 67 is allowed to have the outline corresponding to that of the aforementioned first ground electrode 25. A second separate section 68 is defined in a space between the void paths 64, 65 in the individual region 62. The second separate section 68 is allowed to have the outline corresponding to that of the aforementioned signal electrode 24. A third separate section 69 is likewise defined in the individual section 62 at a location adjacent to the elongated void 63. The third separate section 69 is isolated outside the void path 65. The third separate section 69 is allowed to have the outline corresponding to that of the aforementioned second ground electrode 27.

The elongated void 63 serves to isolate the third separate section 69 from the first separate section 67 in a space between the adjacent regions 62. A first connecting section 71 is utilized to connect the first separate section 67 to the third separate section 69 of the adjacent region 62. The elongated void 63 likewise serves to isolate the third separate section 69 from the second separate section 68 in a space between the adjacent regions 62. Second connecting sections 72, 72 are utilized to connect the second separate section 68 to the third separate section 69 of the adjacent region 62. Moreover, the elongated void 63 also serves to isolate the third separate section 69 from the third separate section 69 in a space between the adjacent regions 62. Third connecting sections 73, 73 are utilized to connect the third separate section 69 to the third separate section 69 of the adjacent region 62.

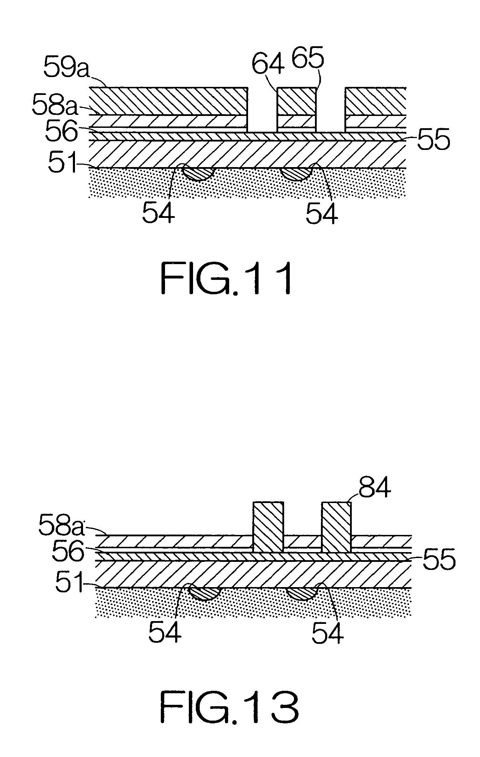

The surface of the Au layer 58 gets exposed at the voids 63, 66 and the void paths 64, 65. Wet etching process is effected on the Au layer 58 and Ti layer 57 in the voids 63, 66 and the void paths 64, 65. Accordingly, the Au and Ti layers 58, 57 are removed in the voids 63, 66 and the void paths 64, 65, as shown in Fig. 11. The surface of the Si layer 56 gets exposed in the voids 63, 66 and the void paths 64, 65. A predetermined stripper is thereafter applied to remove the photoresist film 59a from the region 62. The Ti layer 57 and the Au layer 58 in this manner provide an electrically conductive electroplating base 58a.

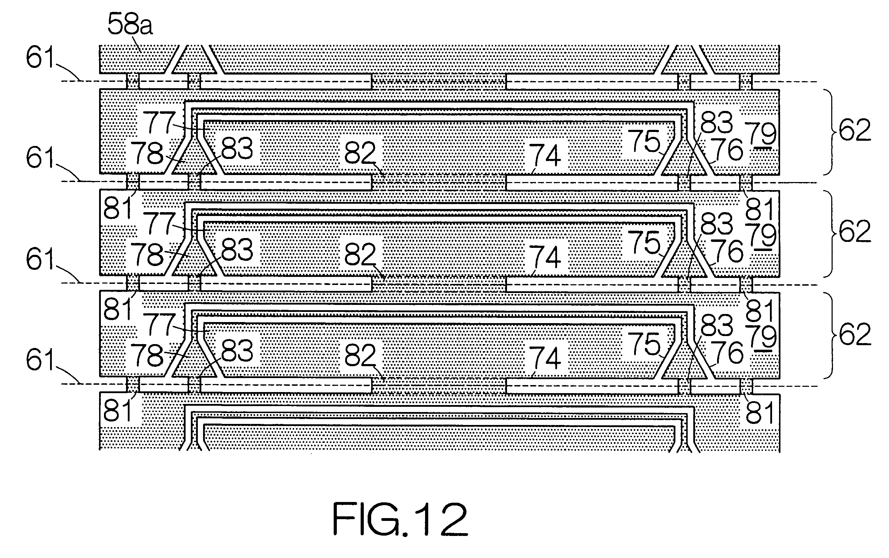

As shown in Fig. 12, an elongated non-conductive section 74 is defined between the adjacent regions 62 in the electroplating base 58a along the cutting line 61. The electroplating base 58a serves to define a pair of non-conductive paths 75, 76 in the individual region 62. The non-conductive path 75, 76 is designed to extend within the region 62 from a point to a point in the non-conductive section 74. As is apparent from Fig. 12, the aforementioned wet etching process serves to remove the Au and Ti layers 58, 57 in the voids 66 over an area extending from opposite ends of the elongated non-conductive section 74 to the outer periphery of the wafer 51.

A first separate electrically conductive section 77 is defined in the individual region 62 at a location adjacent to the elongated non-conductive section 74. The first separate electrically conductive section 77 is isolated inside the non-conductive path 75. The first separate electrically conductive section 77 is allowed to have the outline corresponding to that of the aforementioned first ground electrode 25. A second separate electrically conductive section 78 is likewise defined in the individual region 62 at a location adjacent to the elongated non-conductive section 74. The second separate electrically conductive section 78 is isolated in a space between the non-conductive paths 75, 76. The second separate electrically conductive section 78 is allowed to have the outline corresponding to that of the aforementioned signal electrode 24. An electrically conductive section 79 is also defined in the individual region 62 at a location adjacent to the elongated non-conductive section 74. The electrically conductive section 79 is isolated outside the non-conductive path 76. The electrically conductive section 79 is allowed to have the outline corresponding to that of the aforementioned second ground electrode 27.

First electrically conductive connecting patterns 81, 81 are utilized to connect the electrically conductive section 79 to the adjacent electrically conductive section 79 in a space between the adjacent regions 62. The first electrically conductive connecting patterns 81 extend across the elongated non-conductive section 74. A second electrically conductive connecting pattern 82 is utilized to connect the electrically conductive section 79 to the first separate electrically conductive section 77 of the adjacent region 62. The second electrically conductive connecting pattern 82 extends across the elongated non-conductive section 74. Third electrically conductive connecting patterns 83, 83 are utilized to connect the electrically conductive section 79 to the second separate electrically conductive section 78 of the adjacent region 62. The third electrically conductive connecting patterns 83 extend across the elongated non-conductive section 74.

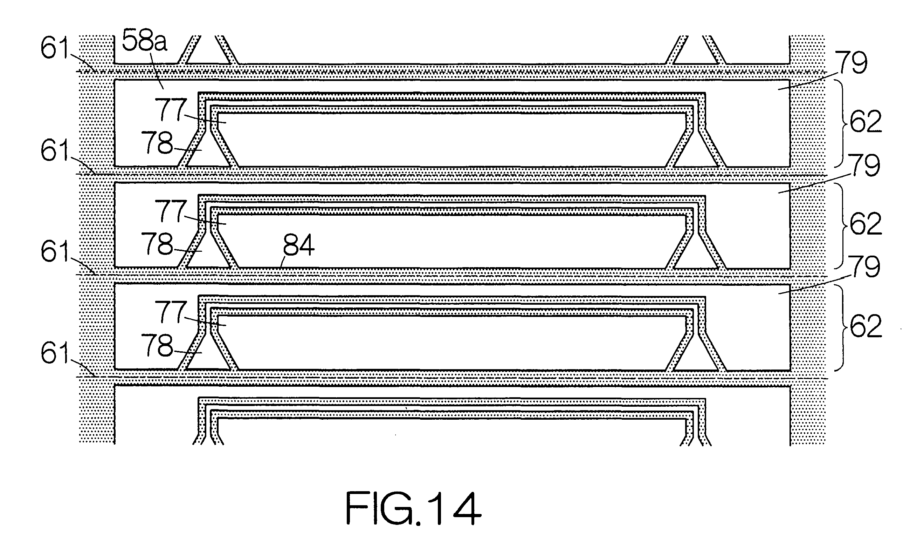

A photoresist is subsequently applied to the entire surface of the wafer 51. The thickness of the photoresist is set at 13µm approximately, for example. The photoresist is subjected to exposure and development. Photoresist films 84 are thus formed in a predetermined pattern, as shown in Fig. 13. The photoresist films 84 extend on the non-conductive paths 75, 76. As shown in Fig. 14, the photoresist films 84 cover over the first, second and third electrically conductive connecting patterns 81, 82, 83 as well as the elongated non-conductive section 74. The electroplating base 58a is exposed at locations adjacent to the photoresist films 84.

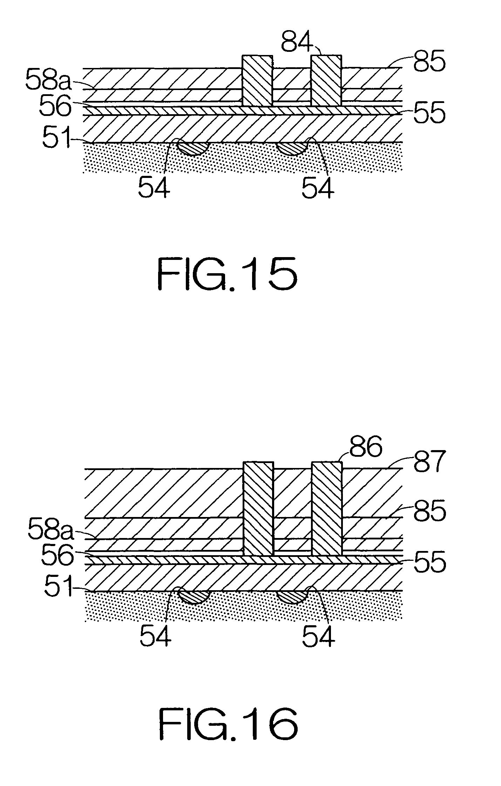

Electroplating is effected on the wafer 51 based on the electroplating base 58a after the photoresist films 84 have been formed. The wafer 51 is soaked in a predetermined electroplating solution. Electric current is supplied to the electroplating base 58a in the electroplating solution. The electric current flows to the electrically conductive section 79 and the first and second separate electrically conductive sections 77, 78 in the adjacent region 62 from the electrically conductive section 79. As shown in Fig. 15, electroplating films or first Au films 85 are in this manner formed on the electrically conductive sections 79 and the first and second separate electrically conductive sections 77, 78 over the wafer 51. The thickness of the first Au film 85 may be set at 4µm approximately, for example. The photoresist films 84 are thereafter removed.

A photoresist is subsequently applied to the entire surface of the wafer 51 in the same manner as described above. The photoresist is subjected to exposure and development. As shown in Fig. 16, photoresist films 86 are formed in a predetermined pattern. The pattern of the photoresist films 86 is set similar to that of the aforementioned photoresist films 84. The photoresist films 86 are formed on the non-conductive paths 75, 76, the first, second and third electrically conductive connecting patterns 81, 82, 83 and the elongated non-conductive sections 74.

Electroplating is again effected on the wafer 51 based on the electroplating base 58a after the photoresist films 86 have been formed. Second Au films 87 are formed on the first Au films 85 over the electrically conductive section 79 and the first and second separate electrically conductive sections 77, 78. The thickness of the second Au film 87 may be set at 13µm approximately, for example. The photoresist films 86 are thereafter removed. The first ground electrodes 25 are in this manner formed on the first separate electrically conductive sections 77. The signal electrodes 24 are formed on the second separate electrically conductive sections 78. The second ground electrodes 27 are formed on the electrically conductive sections 79.

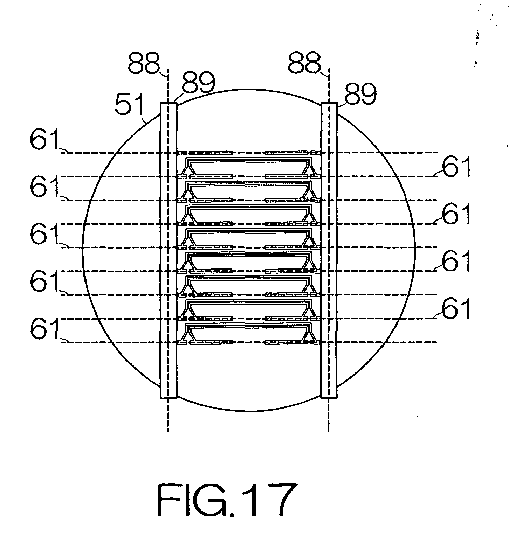

As shown in Fig. 17, so-called fixtures 89 are then attached to the wafer 51 along cutting lines 88, 88 perpendicularly intersecting the cutting lines 61. An adhesive may be employed to attach the fixtures 89. The wafer 51 is then cut along the cutting lines 61, 61, ... so as to separate the individual optical chips 16 from one another. A metallic blade, not shown, may be employed to cut the wafer 51. The cut in this manner along the cutting lines 61 enables establishment of the side surfaces of the optical chips 16.

Here, the first, second and third electrically conductive connecting patterns 81, 82, 83 are cut along the cutting line 61. The first electrically conductive connecting pattern 81 remains in a space between the adjacent regions 62 as the aforementioned first and fifth electrically conductive pieces 32, 41. The second electrically conductive connecting pattern 82 likewise remains as the aforementioned third electrically conductive piece 36. The third electrically conductive connecting pattern 83 also remains as the aforementioned second and fourth electrically conductive pieces 34, 38.

The wafer 51 is then subjected to further cuts along the cutting lines 88, 88. A resin diamond blade, not shown, may be employed to cut the wafer 51. The resin diamond blade is forced to trace the fixtures 89. The cut in this manner along the cutting lines 88 enables establishment of the end surfaces 17a, 17b of the optical chips 16. The tip ends of the light waveguides 54 are exposed at the end surfaces 17a, 17b.

A Si layer, not shown, is subsequently formed on the side surfaces of the body 17 of the individual optical chip 16. The thickness of the Si layer may be set at 100nm approximately, for example. AR (Anti-reflective) coating may be formed over the end surfaces 17a, 17b of the optical chip 16. The optical chip 16 can be obtained in this manner.

The method of making the optical chip 16 allows establishment of the non-conductive path 75, 76 extending from a point to a point in the elongated non-conductive section 74. The tip ends of the non-conductive paths 75, 76 are thus connected to the elongated non-conductive section 74. This serves to completely avoid existence of the electroplating base 58a at the tip ends of the non-conductive paths 75, 76. It is possible to reliably prevent deposition of the electroplating films or the first and second Au films 85, 87 in the non-conductive paths 75, 76. Even if the thickness of the first and second Au films 85, 87, namely the electrodes 24, 25, 27, is set larger to improve the transmission rate of the optical chip 16, the electrodes 24, 25, 27 are reliably insulated from each other.

Otherwise, the optical chip 16 may employ, in place of the aforementioned electroplating base 58a made of the Ti and Au layers 57, 58, an electroplating base of a multilayered structure having Cr and Au layers, Ni and Cr layers, Au and Ti and Au layers, Cr and Ni and Au layers, or the like.

## Claims

1. A method of electroplating, comprising forming an electrically conductive electroplating base over a wafer, wherein a non-conductive section, at least a non-conductive path and an electrically conductive connecting pattern are formed on a surface of the wafer:
said non-conductive section extending along a predetermined cutting line in a space between first and second regions;
said non-conductive path extending in the second region from a point of the non-conductive section to a point of the non-conductive section, said non-conductive path defining a separate electrically conductive section isolated in the second region; and
said electrically conductive connecting pattern crossing the non-conductive section, said electrically conductive connecting pattern connecting the separate electrically conductive section to an electrically conductive section within the first region.

2. The method of electroplating according to claim 1, further comprising supplying electric current to the separate electrically conductive section from the electrically conductive connecting pattern so as to form an electroplating film over the separate electrically conductive section.

3. The method of electroplating according to clam 2, further comprising forming a resist film over the electrically conductive connecting pattern and the non-conductive section prior to establishment of the electroplating film.

4. The method of electroplating according to claim 2, further comprising cutting the wafer along the predetermined cutting line after the electroplating film has been formed.
